# EUROPÄISCHE PATENTANMELDUNG

(11) **EP 3 267 082 A1**
(43) Veröffentlichungstag der Anmeldung: **10.01.2018**
(21) Anmeldenummer: 16177703.2
(22) Anmeldetag: 04.07.2016
(51) Int. Cl.: F16L 5/00, H02G 3/04, H02G 3/22, F16L 5/04

(54) **FEUERSCHUTZVORRICHTUNG ZUM VERSCHLIESSEN EINER ÖFFNUNG IN EINER WAND**

(71) Anmelder: HILTI Aktiengesellschaft, 9494 Schaan (LI)
(72) Erfinder: Förg, Christian, 86862 Lamerdingen (DE); Simon, Sebastian, 86807 Buchloe Lindenberg (DE); Artmann, Hans Henning, 80335 München (DE)
(74) Vertreter: Hilti Aktiengesellschaft Corporate Intellectual Property

(57) **Zusammenfassung**

Eine Feuerschutzvorrichtung zum Verschließen einer Öffnung in einer Wand (30) weist eine Dichtlage (12) und einen an der Dichtlage (12) befestigten Rahmen (14) auf, wobei die Dichtlage (12) einen Durchgangsbereich (16) zum Durchführen eines Objektes (O) und einen Randbereich (18) aufweist, der den Durchgangsbereich (16) zumindest teilweise, insbesondere vollständig umgibt, wobei die Dichtlage (12) im Durchgangsbereich (16) Dichtzungen (20) aufweist, die gegenüber dem Randbereich (18) bewegbar sind und die dichtend aneinander anliegen, wobei der Rahmen (14) im Randbereich (18) an der Dichtlage (12) befestigt ist und der Rahmen (14) den Durchgangsbereich (16) zumindest teilweise, insbesondere vollständig umgibt.

## Beschreibung

Die Erfindung betrifft eine Feuerschutzvorrichtung zum Verschließen einer Öffnung in einer Wand, durch die Objekte wie Rohre oder Kabel verlegt werden können.

Brandschutzwände unterliegen besonderen Vorschriften in Hinsicht auf ihre Rauchdurchlässigkeit und Feuerbeständigkeit. Jedoch müssen auch durch Brandschutzwände Kabel, Rohre oder andere Objekte hindurchgeführt werden. Hierzu werden Öffnungen oder Löcher in die Brandschutzwand eingebracht, um die Objekte durchzuführen. Durch diese Öffnungen werden allerdings die Eigenschaften der Wand als Brandschutzwand beeinträchtigt, sodass die Öffnungen oder Löcher wieder verschlossen werden müssen, unabhängig davon, ob ein Objekt durchgeführt wurde oder nicht.

Feuerschutzvorrichtungen dienen dazu, die Öffnungen und Löcher in Brandschutzwänden wieder zu verschließen. Feuerschutzvorrichtungen werden deshalb vor oder nach dem Durchführen des Objekts durch die Öffnung an der Wand befestigt und stellen die benötigten Anforderungen an den Brandschutz wieder her und können die Schallisolierung der Wand verbessern. Unter Umständen sind sie sogar wasserdicht.

Üblich sind zum einen Feuerschutzvorrichtungen aus einer formbaren Masse, die in die Öffnung eingeformt werden und, je nach Masse, aushärten müssen. Solche formbaren Massen als Feuerschutzvorrichtung sind jedoch schwierig in der Anwendung, und Fehler beim Anbringen der formbaren Masse oder beim Aushärten der Masse können zu Qualitätseinbußen im Feuerschutz führen.

Eine andere übliche Lösung sind vorgeformte Feuerschutzvorrichtungen, beispielsweise Dichtungen oder Dichtringe. Bei vorgeformten Feuerschutzvorrichtungen muss jedoch die Öffnung oder das Loch genau an die Form der Feuerschutzvorrichtung angepasst sein, damit diese in der Wand installiert werden kann. Dies führt dazu, dass die Feuerschutzvorrichtung nicht oder nur mit aufwändiger Montage bei anders geformten Öffnungen verwendet werden kann.

Es ist somit Aufgabe der Erfindung, eine Feuerschutzvorrichtung bereitzustellen, die einfach und ohne Qualitätsverluste an Öffnungen mit beliebiger Form zu montieren ist.

Die Aufgabe wird gelöst durch eine Feuerschutzvorrichtung zum Verschließen einer Öffnung in einer Wand, mit einer Dichtlage und einem an der Dichtlage befestigten Rahmen, wobei die Dichtlage einen Durchgangsbereich zum Durchführen eines Objektes und einen Randbereich aufweist, der den Durchgangsbereich zumindest teilweise, insbesondere vollständig umgibt, wobei die Dichtlage im Durchgangsbereich Dichtzungen aufweist, die gegenüber dem Randbereich bewegbar sind und die dichtend aneinander anliegen, wobei der Rahmen im Randbereich an der Dichtlage befestigt ist und der Rahmen den Durchgangsbereich zumindest teilweise, insbesondere vollständig umgibt.

Dabei entspricht beispielsweise die Außenkontur der Feuerschutzvorrichtung der Außenkontur der Dichtlage. Die Dichtlage ist zum Beispiel in montierter Stellung der Feuerschutzvorrichtung der Wand zugewandt oder hat Kontakt mit der Wand. Auch kann der Rahmen im gesamten Randbereich vorgesehen sein.

Wenn sich kein Objekt durch den Durchgangsbereich erstreckt, liegen die Dichtzungen, die dreieckig oder ähnlich zu Kuchenstücken ausgeführt sein können, dichtend aneinander an, sodass der gesamte Durchgangsbereich verschlossen ist.

Die Feuerschutzvorrichtung wird so montiert, dass der Durchgangsbereich zumindest teilweise mit der Öffnung der Wand oder Teilen davon fluchtet, sodass Objekte durch die Wand und den Durchgangsbereich durchgeführt werden können. Die Dichtzungen der Feuerschutzvorrichtung verschließen dann die Öffnung und/oder den Abstand zwischen Objekt und Öffnungsrand brandschutzsicher.

Dadurch, dass die Feuerschutzvorrichtung ein vorgeformtes Bauteil ist und nicht aus einer auszuhärtenden Masse besteht, sind Qualitätseinbußen ausgeschlossen, die durch die falsche Montage oder ungeeignete Bedingungen beim Aushärten entstehen. Außerdem muss die Öffnung oder das Loch in der Wand nicht an die Form der Feuerschutzvorrichtung angepasst werden, da es unerheblich ist, ob die Öffnung der Geometrie des Durchgangsbereiches entspricht, weil durch die Dichtlippen ein feuerfester und rauchdichter Verschluss der Öffnung gegeben ist und zwar unabhängig von der genauen Form der dahinterliegenden Öffnung. Somit wird die Montage vereinfacht und der Zeitaufwand der Montage deutlich verringert.

Vorzugsweise sind die Dichtzungen elastisch ausgebildet. Dies kann durch die Verwendung eines elastischen Materials zur Herstellung der Dichtzungen und/oder durch eine Beaufschlagung der Dichtzungen mit einer Rückstellkraft durch Federn erfolgen. Auf diese Weise wird gewährleistet, dass sich die Dichtzungen zu jeder Zeit entweder dichtend an das Objekt anpressen oder in ihrer die Öffnung abdichtenden Ausgangsposition sind. Außerdem wird durch die elastische Ausführung der Dichtzungen erreicht, dass sich das Objekt auch nach Montage der Feuerschutzvorrichtung sowohl in axialer als auch in radialer Richtung verschieben lässt.

Beispielsweise sind die aneinander anliegenden Flächen der Dichtzungen abgerundet ausgebildet, wodurch Beschädigungen, wie Kratzer, des durch den Durchgangsbereich durchgeführten Objektes verhindert werden.

In einer Ausgestaltung der Erfindung sind die Dichtzungen einstückig mit der Dichtlage ausgebildet. Dabei können die Dichtzungen durch Schnitte in der Dichtlage im Durchgangsbereich erzeugt werden. Dreieckige Dichtzungen können beispielsweise durch mehrere sternförmig zueinander angeordnete Schnitte, wie bei einem Kuchen, erzeugt werden, die sich in einem Punkt schneiden und zueinander verdreht sind. Auf diese Weise ist eine sehr einfache und kostengünstige Möglichkeit der Herstellung der Feuerschutzvorrichtung gegeben.

Vorzugsweise sind die Dichtzungen und/oder die Dichtlage aus einem elastischen oder plastisch verformbaren Material hergestellt, beispielweise aus Gummi, Polyurethan, Ethylen-Propylen-Dien-Kautschuk oder Polyvinylchlorid, wodurch die Feuerschutzvorrichtung kostengünstig hergestellt werden kann.

In einer Ausführungsvariante ist der Rahmen zumindest teilweise aus dem gleichen Material wie die Dichtlage hergestellt, insbesondere ist der Rahmen einstückig mit der Dichtlage hergestellt und/oder hat eine größere oder geringere Dicke als die Dichtlage. Auf diese Weise werden die Herstellungskosten der Feuerschutzvorrichtung weiter verringert.

Vorzugsweise ist das Material der Dichtlage, des Rahmens und/oder der Dichtzungen geschäumt. Dabei kann es ein geschlossenzelliges oder ein integral geschäumtes Material sein. Auf diese Weise wird die Stabilität der Feuerschutzvorrichtung weiter verbessert.

In einer Ausführungsform der Erfindung sind die Dichtlage, der Rahmen und/oder die Dichtzungen intumeszierend ausgeführt, wodurch die Brandschutzeigenschaften der Feuerschutzvorrichtung weiter verbessert werden.

Vorzugsweise ist das Material der Dichtlage, des Rahmens und/oder der Dichtzungen mit Flammschutzadditiven versehen. Zum Beispiel eignen sich hierzu solche auf Phosphorbasis oder auch halogenhaltige oder anorganische Zuschlagstoffe wie Kreide, Titandioxid, Aluminiumhydroxid. Durch die Flammschutzadditive kann die Feuerwiderstandsdauer der Feuerschutzvorrichtung erhöht werden.

Vorzugsweise ist der Rahmen flexibel, oder elastisch / plastisch verformbar ausgeführt, wodurch die Feuerschutzvorrichtung auch an unebenen Wänden montiert werden kann.

In einer Ausgestaltung der Erfindung weist der Rahmen einen Draht oder ein dünnes Blech auf, wodurch ein sehr stabiler und gleichzeitig flexibler Rahmen realisiert wird.

In einer Ausführungsvariante der Erfindung weist die Feuerschutzvorrichtung einen Klebstoff auf, der an der vom Rahmen abgewandten Seite der Dichtlage vorgesehen ist, wobei der Klebstoff derart ausgebildet ist, dass durch ihn die Feuerschutzvorrichtung an der Wand befestigt werden kann. Beispielsweise enthält der Klebstoff Butyl, Polyurethan, Acryl und/oder silanterminierten Polyether. Auch kann der Klebstoff reaktiv und/oder nachvernetzend sein, beispielsweise ein Polyurethan-Hotmelt. Durch die Verwendung eines Klebstoffes ist eine sehr einfache, zuverlässige und dichtende Befestigung der Feuerschutzvorrichtung an der Wand erreicht.

Vorzugsweise ist der Klebstoff vollflächig auf der Dichtlage aufgetragen und/oder als Klebeband an der Dichtlage vorgesehen, wodurch die Montage der Feuerschutzvorrichtung weiter vereinfacht wird.

In einer Ausgestaltung der Erfindung weist die Feuerschutzvorrichtung einen Trennschnitt auf, der durch den Durchgangsbereich und auf zumindest einer Seite des Durchgangsbereiches vollständig durch den Randbereich verläuft und der sich durch die Dichtlage und den Rahmen erstreckt, sodass der Trennschnitt die Feuerschutzvorrichtung in zwei Teile teilt, die gegeneinander bewegbar sind. Die Bewegung erfolgt insbesondere in der durch die Dichtlage gebildeten Ebene, z.B. an einem am Außenrand des Rahmens vorgesehenen Filmscharnier. Auf diese Weise ist es möglich, die Feuerschutzvorrichtung auch dann zu montieren, wenn bereits Objekte, wie Rohre oder Kabel, in der abzudichtenden Öffnung verlegt sind.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Figur 1 eine erfindungsgemäße Feuerschutzvorrichtung in Draufsicht,
- Figur 2 eine perspektivische Ansicht der Feuerschutzvorrichtung gemäß Figur 1,
- Figur 3 die Feuerschutzvorrichtung aus Figur 1 in einer perspektivischen Rückansicht,
- Figur 4 eine Draufsicht der Feuerschutzvorrichtung gemäß Figur 1 im geöffneten Zustand, und
- Figur 5 die Feuerschutzvorrichtung nach Figur 1 in einem an einer Wand montierten Zustand.

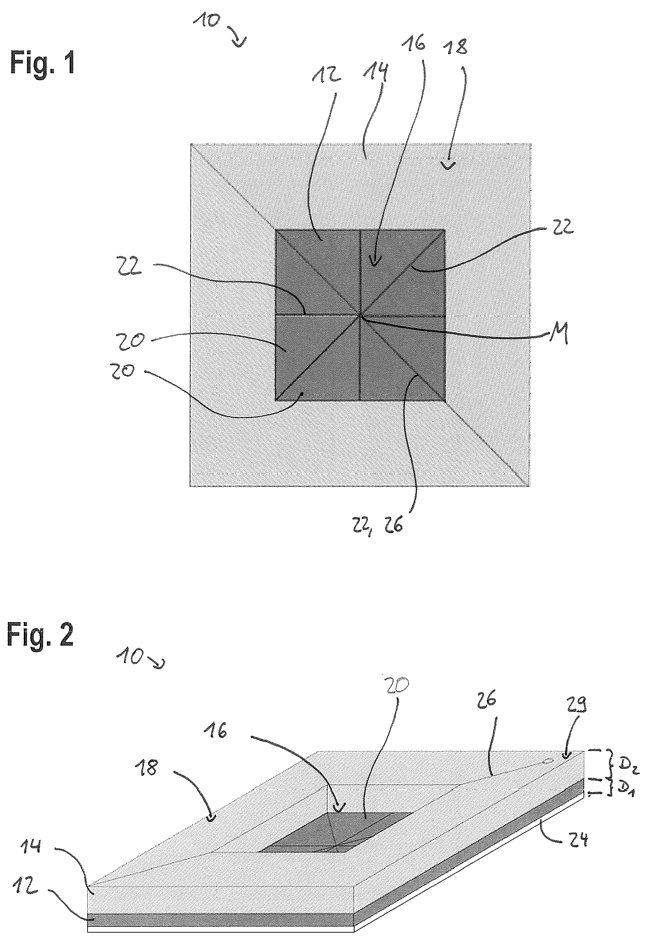

Eine Feuerschutzvorrichtung 10 ist in Figur 1 in Draufsicht dargestellt. Die Feuerschutzvorrichtung 10 weist eine Dichtlage 12 und einen Rahmen 14 auf, wie auch aus Figur 2 hervorgeht.

Die Dichtlage 12 ist aus einem elastisch oder plastisch verformbaren Material hergestellt, beispielsweise aus Gummi, Polyurethan, Ethylen-Propylen-Dien-Kautschuk oder Polyvinylchlorid.

Auch der Rahmen 14 ist aus einem elastisch oder plastisch verformbaren Material hergestellt, wie Gummi, Polyurethan, Ethylen-Propylen-Dien-Kautschuk oder Polyvinylchlorid. In der gezeigten Ausführungsform unterscheiden sich die Materialien des Rahmens 14 und der Dichtlage 12, jedoch können die Dichtlage 12 und der Rahmen 14 selbstverständlich auch aus dem gleichen Material und sogar einstückig hergestellt werden. Auch kann der Rahmen 14 einen Draht oder ein dünnes Blech aufweisen.

Zudem sind die Dichtlage 12 und der Rahmen 14 intumeszierend ausgeführt, und das Material der Dichtlage 12 und des Rahmens 14 ist mit Flammschutzadditiven versehen, beispielsweise mit solchen Flammschutzadditiven auf Phosphorbasis. Denkbar sind jedoch auch flammhemmende halogenhaltige oder anorganische Zuschlagstoffe wie Kreide, Titandioxid, Aluminiumhydroxid als Flammschutzadditive.

In der gezeigten Ausführungsform (vgl. Fig. 2) ist der Rahmen 14 dicker als die Dichtlage 12. Denkbar ist jedoch auch, dass die Dicke D₂ des Rahmens 14 geringer ist als die Dicke D₁ der Dichtlage 12. Dies kann beispielsweise dann der Fall sein, wenn das Material des Rahmens 14 steifer ist als das Material der Dichtlage 12.

Der Rahmen 14 verleiht der Dichtlage 12 und damit der gesamten Feuerschutzvorrichtung 10 Stabilität. Gleichzeitig ist der Rahmen 14 nicht vollkommen starr, sondern flexibel, sodass die Feuerschutzvorrichtung 10 ein gewisses Maß an Flexibilität aufweist.

Die Feuerschutzvorrichtung 10 hat in der gezeigten Ausführungsform in Draufsicht eine quadratische Außenkontur, und die Dichtlage 12 erstreckt sich über die gesamte Feuerschutzvorrichtung 10, d. h. die Dichtlage 12 hat ebenfalls eine quadratische Außenkontur in Draufsicht.

Selbstverständlich kann die Feuerschutzvorrichtung 10 bzw. die Dichtlage 12 auch andere Außenkonturen aufweisen, beispielsweise eine rechteckige, kreisförmige oder ovale Außenkontur.

Die Dichtlage 12 und damit auch die Feuerschutzvorrichtung 10 weist einen Durchgangsbereich 16 und einen Randbereich 18 auf.

Der Durchgangsbereich 16 ist zentral in der Feuerschutzvorrichtung 10 vorgesehen und umfasst unter anderem den geometrischen Mittelpunkt M der Dichtlage 12.

Der Randbereich 18 erstreckt sich vom Durchgangsbereich 16 ausgehend nach außen bis zur Außenkontur der Feuerschutzvorrichtung 10 bzw. der Dichtlage 12. Der Randbereich 18 verläuft somit vollständig um den Durchgangsbereich 16 herum.

Der Rahmen 14 ist im Randbereich 18 der Feuerschutzvorrichtung 10 bzw. der Dichtlage 12 vorgesehen und an der Dichtlage 12 befestigt.

In der gezeigten Ausführungsform bedeckt der Rahmen 14 den Randbereich 18 der Dichtlage 12 bzw. der Feuerschutzvorrichtung 10 auf einer Seite vollständig.

Im Durchgangsbereich 16 weist die Dichtlage 12 Dichtzungen 20 auf, die in der gezeigten Ausführungsform eine dreieckige Kontur haben.

Die Dichtzungen 20 sind einstückig mit der übrigen Dichtlage 12 ausgeführt, also auch aus demselben Material wie die Dichtlage 12 und daher elastisch.

In der gezeigten Ausführungsform werden die Dichtzungen 20 durch Schnitte 22 in einer plattenförmigen Dichtlage voneinander getrennt. Hierzu ist die Dichtlage 12 mit vier geraden Schnitten 22 versehen, die sich jeweils durch den gesamten Durchgangsbereich 16 und den Mittelpunkt M der Dichtlage 12 erstrecken. Die Schnitte 22 schließen dabei zu denen ihnen jeweils benachbarten Schnitten 22 einen Winkel von 45° ein und bilden eine Sternform.

Die dreieckigen Dichtzungen 20, die über eine Seite mit dem Randbereich 18 verbunden sind, laufen zum Mittelpunkt M hin spitz zu.

Außerdem liegen die Dichtzungen 20 im Durchgangsbereich 16 dichtend aneinander an, wenn kein Objekt durch den Durchgangsbereich 16 durchgeführt ist. Diese Position ist die geschlossene oder Ausgangsposition der Dichtzungen 20.

Die aneinander anliegenden Flächen der Dichtzungen 20 können außerdem abgerundet ausgebildet sein, um Kanten zu vermeiden. Hierfür sind die Dichtzungen insbesondere gespritzt oder geschäumt.

Die Dichtzungen 20, insbesondere ihre dem Mittelpunkt M zugewandten Abschnitte, sind aufgrund des elastischen Materials gegenüber dem Randbereich 18, dem Rahmen 14 und der übrigen Dichtlage 12 bewegbar, federn jedoch in ihre Ausgangsposition zurück, wenn keine Kraft auf sie wirkt.

Denkbar ist allerdings auch, dass die Dichtzungen 20 nicht aufgrund des Materials elastisch sind, sondern durch Federn mit einer Rückstellkraft beaufschlagt werden.

Selbstverständlich sind auch andere Geometrien der Schnitte 22 und damit andere Konturen der Dichtzungen 20 denkbar.

Denkbar ist selbstverständlich auch, dass die Dichtzungen 20 und die Dichtlage 12 aus verschiedenen Materialien bestehen. Hierzu eignet sich ebenfalls ein elastisch oder plastisch verformbares Material, beispielsweise Gummi, Polyurethan, Ethylen-Propylen-Dien-Kautschuk oder Polyvinylchlorid.

Außerdem ist in der gezeigten Ausführungsform ein Klebstoff an der dem Rahmen 14 abgewandten Seite der Dichtlage 12 vorgesehen. Der Klebstoff ist als Klebeband 24 ausgebildet und vollflächig an der Dichtlage 12 aufgebracht.

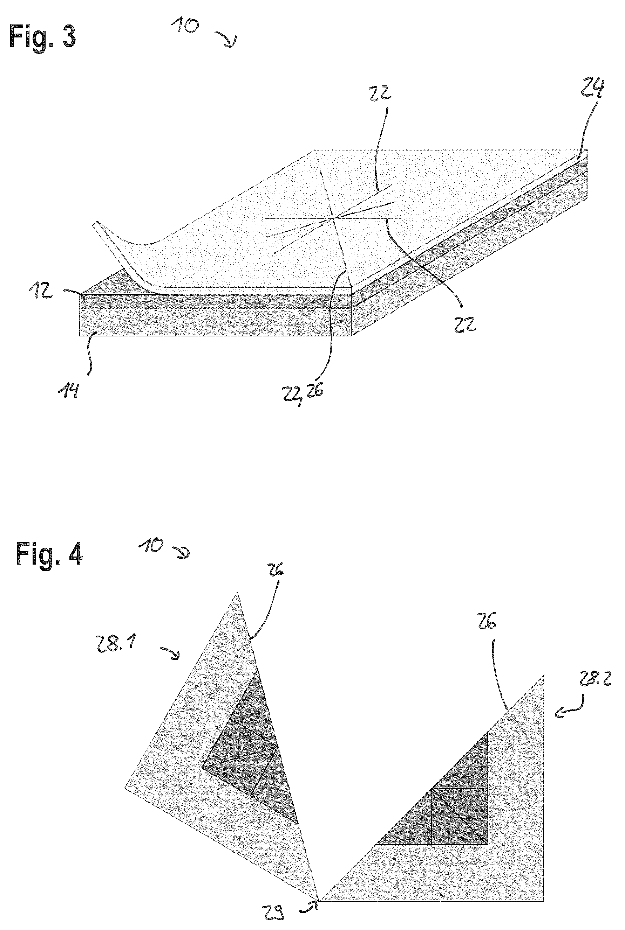

Das Klebeband 24 weist dabei, wie in Figur 3 zu sehen, ebenfalls die gleichen Schnitte 22 wie die Dichtlage 12 auf. Jedoch ist in Figur 3 das Klebeband der Übersicht halber verhältnismäßig dick dargestellt.

Zudem erstreckt sich einer der Schnitte 22 über den Durchgangsbereich 16 hinaus und bildet somit einen Trennschnitt 26. Der Trennschnitt 26 verläuft auf einer Seite des Durchgangsbereiches 16 vollständig durch den Randbereich 18 und ragt auf der gegenüberliegenden Seite ebenfalls vom Durchgangsbereich 16 ausgehend in den Randbereich 18 hinein. In der Tiefe erstreckt sich der Trennschnitt 26 vollständig durch die Dichtlage 12 und im Randbereich 18 auch vollständig durch den Rahmen 14.

Der Trennschnitt 26 teilt somit die Feuerschutzvorrichtung 10 in zwei Teile 28.1 und 28.2, die miteinander nur noch über einen kurzen Abschnitt 29 am äußeren Rand des Randbereiches 18 unter Bildung eines Filmscharniers verbunden sind, wie in Figur 4 zu sehen ist.

Die Teile 28.1 und 28.2 lassen sich gegeneinander bewegen, sodass die Feuerschutzvorrichtung 10 geöffnet werden kann, wie dies in Figur 4 dargestellt ist.

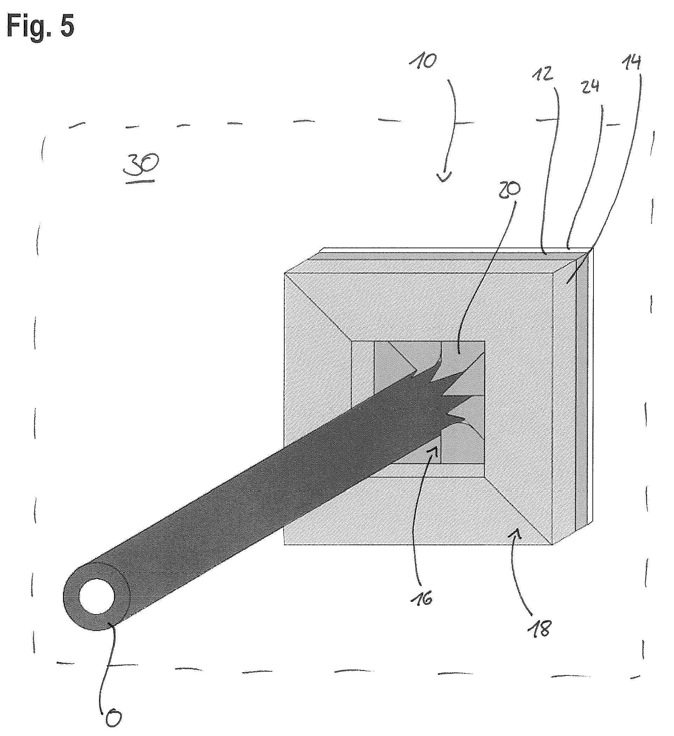

In Figur 5 ist die Feuerschutzvorrichtung 10 an einer Wand 30 montiert dargestellt. Die Wand 30 ist durch die gestrichelte Linie nur angedeutet. In der Wand 30 ist eine Öffnung bzw. ein Loch vorgesehen, das in Figur 5 von der Feuerschutzvorrichtung 10 verdeckt ist. In der Öffnung ist ein Objekt O vorgesehen, das in Figur 5 als Rohr dargestellt ist.

Zur Montage der Feuerschutzvorrichtung 10 wird die Schutzfolie des Klebebandes 24 abgezogen, und die Feuerschutzvorrichtung 10 wird dann mittels des Klebebandes 24 an der Wand 30 befestigt.

Somit ist die Dichtlage 12 der Wand 30 zugewandt bzw. steht dann mit der Wand 30 in Kontakt.

Im Falle, dass die Wand 30 nicht eben ist, sondern Unebenheiten oder eine Biegung aufweist, kann die Feuerschutzvorrichtung aufgrund der Flexibilität des Rahmens 14 problemlos an die Oberfläche der Wand 30 angepasst werden.

Die Feuerschutzvorrichtung 10 wird so an der Wand 30 positioniert, dass der Durchgangsbereich 16 die Öffnung der Wand 30 zumindest teilweise verschließt. Insbesondere wird der Mittelpunkt M des Durchgangsbereiches 16 möglichst mittig auf der Öffnung platziert.

Durch die Öffnung in der Wand 30 kann dann ein Objekt O hindurchgeführt werden. Dabei werden die Dichtzungen 20 der Dichtlage 12 gegenüber dem Rahmen 14 verbogen und liegen dann eng am Objekt O an, sodass keine oder nur minimale Spalten entstehen.

Dadurch, dass die Seitenflächen der Dichtzungen 20 abgerundet sind, wird eine Beschädigung am Objekt O beim Einführen oder bei späteren möglichen Bewegungen des Objektes O vermieden.

Im Falle eines Feuers verhindert die Feuerschutzvorrichtung 10 und insbesondere die Dichtzungen 20, dass durch die Öffnung der Wand 30 Flammen schlagen oder Rauch strömen kann.

Eventuell vorhandene kleine Spalten zwischen den einzelnen Dichtzungen 20 oder zwischen den Dichtzungen 20 und dem Objekt O werden spätestens dann verschlossen, wenn sich die Dichtzungen 20 bei Hitzeeinwirkung aufgrund ihrer Intumeszenz ausdehnen.

Die Öffnung der Wand 30 ist somit durch die Feuerschutzvorrichtung 10 wieder brandschutzgerecht verschlossen.

Im Falle, dass sich vor der Montage der Feuerschutzvorrichtung 10 bereits ein Objekt O in der Öffnung der Wand 30 befindet, kann die Feuerschutzvorrichtung 10, wie in Figur 4 dargestellt, entlang des Trennschnittes 26 in der Ebene der Dichtlage 12 aufgeklappt werden.

Die Feuerschutzvorrichtung 10 wird dann um das Objekt O herum wieder zurück geklappt, sodass das Objekt O wie vorgesehen im Durchgangsbereich 16 aufgenommen ist, wobei die Dichtzungen 20 an ihm anliegen. Danach kann dann die Feuerschutzvorrichtung 10 wie beschrieben mit der Wand 30 verbunden werden.

Die Dichtzungen 20 werden auch hier durch das Objekt O aus ihrer Ausgangsposition bewegt, sodass das Objekt O durch den Durchgangsbereich 16 hindurchtreten kann.

Selbstverständlich sind neben der hier beschriebenen Ausführung noch andere Möglichkeiten zur Realisierung einer Feuerschutzvorrichtung denkbar.

So kann das Material der Dichtzungen 20, der Dichtlage 12 und das Material des Rahmens 14 geschäumt sein. Dabei kann als Material ein geschlossenzelliges oder ein integral geschäumtes Material ausgewählt werden.

Auch können die Dichtzungen 20 und die Dichtlage 12 nicht einstückig ausgeführt und aus unterschiedlichen Materialien sein.

Bezüglich der Befestigung der Feuerschutzvorrichtung 10 an der Wand ist es auch denkbar, dass der Klebstoff nicht als Klebeband vorgesehen ist, sondern lediglich vollflächig auf die Dichtlage 12 aufgetragen ist.

Der Klebstoff kann beispielsweise Butyl, Polyurethan, Acryl und/oder silanterminierten Polyether enthalten. Auch ein reaktiver und nachvernetzender Klebstoff ist denkbar, wie ein Polyurethan-Hotmelt.

Ferner kann die Feuerschutzvorrichtung 10 durch Schrauben, Nägel oder durch andere Befestigungselemente an der Wand 30 befestigt werden. Hierzu können Löcher für die Schrauben, Nägel oder die anderen Befestigungselemente in der Feuerschutzvorrichtung 10 vorgesehen sein.

## Patentansprüche

1. Feuerschutzvorrichtung zum Verschließen einer Öffnung in einer Wand (30), mit einer Dichtlage (12) und einem an der Dichtlage (12) befestigten Rahmen (14), wobei die Dichtlage (12) einen Durchgangsbereich (16) zum Durchführen eines Objektes (O) und einen Randbereich (18) aufweist, der den Durchgangsbereich (16) zumindest teilweise, insbesondere vollständig umgibt, wobei die Dichtlage (12) im Durchgangsbereich (16) Dichtzungen (20) aufweist, die gegenüber dem Randbereich (18) bewegbar sind und die dichtend aneinander anliegen, wobei der Rahmen (14) im Randbereich (18) an der Dichtlage (12) befestigt ist und der Rahmen (14) den Durchgangsbereich (16) zumindest teilweise, insbesondere vollständig umgibt.

2. Feuerschutzvorrichtung nach Anspruch 1, **dadurch gekennzeichnet, dass** die Dichtzungen (20) elastisch ausgebildet sind.

3. Feuerschutzvorrichtung nach Anspruch 2, **dadurch gekennzeichnet, dass** die aneinander anliegenden Flächen der Dichtzungen (20) abgerundet sind.

4. Feuerschutzvorrichtung nach Anspruch 2 oder 3, **dadurch gekennzeichnet, dass** die Dichtzungen (20) einstückig mit der Dichtlage (12) ausgebildet sind.

5. Feuerschutzvorrichtung nach einem der vorhergehenden Ansprüche, **dadurch gekennzeichnet, dass** die Dichtzungen (20) und/oder die Dichtlage (12) aus einem elastisch oder plastisch verformbaren Material hergestellt sind, beispielweise aus Gummi, Polyurethan, Ethylen-Propylen-Dien-Kautschuk oder Polyvinylchlorid.

6. Feuerschutzvorrichtung nach einem der vorhergehenden Ansprüche, **dadurch gekennzeichnet, dass** der Rahmen (14) zumindest teilweise aus dem gleichen Material wie die Dichtlage (12) hergestellt ist, insbesondere einstückig mit der Dichtlage (12) hergestellt ist und/oder eine größere oder geringere Dicke (D₁) als die Dichtlage (12) hat.

7. Feuerschutzvorrichtung nach einem der vorhergehenden Ansprüche, **dadurch gekennzeichnet, dass** das Material der Dichtlage (12), des Rahmens (14) und/oder der Dichtzungen (20) geschäumt ist.

8. Feuerschutzvorrichtung nach einem der vorhergehenden Ansprüche, **dadurch gekennzeichnet, dass** die Dichtlage (12), der Rahmen (14) und/oder die Dichtzungen (20) intumeszierend ausgeführt sind.

9. Feuerschutzvorrichtung nach einem der vorhergehenden Ansprüche, **dadurch gekennzeichnet, dass** das Material der Dichtlage (12), des Rahmens (14) und/oder der Dichtzungen (20) mit Flammschutzadditiven versehen ist.

10. Feuerschutzvorrichtung nach einem der vorhergehenden Ansprüche, **dadurch gekennzeichnet, dass** der Rahmen (14) flexibel ausgeführt ist.

11. Feuerschutzvorrichtung nach einem der vorhergehenden Ansprüche, **dadurch gekennzeichnet, dass** der Rahmen (14) einen Draht oder ein dünnes Blech aufweist.

12. Feuerschutzvorrichtung nach einem der vorhergehenden Ansprüche, **dadurch gekennzeichnet, dass** die Feuerschutzvorrichtung (10) einen Klebstoff aufweist, der an der vom Rahmen (14) abgewandten Seite der Dichtlage (12) vorgesehen ist, wobei der Klebstoff derart ausgebildet ist, dass durch ihn die Feuerschutzvorrichtung (10) an der Wand (30) befestigt werden kann.

13. Feuerschutzvorrichtung nach Anspruch 12, **dadurch gekennzeichnet, dass** der Klebstoff vollflächig auf der Dichtlage (12) aufgetragen ist und/oder als Klebeband (24) an der Dichtlage (12) vorgesehen ist.

14. Feuerschutzvorrichtung nach einem der vorhergehenden Ansprüche, **dadurch gekennzeichnet, dass** die Feuerschutzvorrichtung (10) zumindest einen Trennschnitt (26) aufweist, der durch den Durchgangsbereich (16) und auf zumindest einer Seite des Durchgangsbereiches (16) vollständig durch den Randbereich (18) verläuft und der sich durch die Dichtlage (12) und den Rahmen (14) erstreckt, sodass der Trennschnitt (26) die Feuerschutzvorrichtung (10) in zwei Teile (28.1, 28.2) teilt, die gegeneinander bewegbar sind, insbesondere in der Ebene, die durch die Dichtlage (12) gebildet ist.
